# EUROPÄISCHE PATENTSCHRIFT

(11) **EP 2 649 882 B1**
(45) Veröffentlichungstag und Bekanntmachung des Hinweises auf die Patenterteilung: **31.12.2014**
(21) Anmeldenummer: 12163609.6
(22) Anmeldetag: 10.04.2012
(51) Int. Cl.: A21C 5/00, A21C 11/10, B26D 1/15, B26D 3/08, B26D 3/16, B26D 7/06, B26D 11/00, A21C 9/08, B26D 7/01

(54) **Teigteil- und Teigformvorrichtung**
Dough separation and shaping device
Dispositif de séparation et de mise en forme de pâte

(43) Veröffentlichungstag der Anmeldung: 16.10.2013
(73) Patentinhaber: Fritsch GmbH, 97348 Markt Einersheim (DE)
(72) Erfinder: Fackelmann, Markus, 97334 Sommerach (DE); Hoos, Josef, 97348 Markt Einersheim (DE)
(74) Vertreter: advotec.

(56) Entgegenhaltungen:
- EP-A1- 0 377 964
- DE-U1- 9 104 957
- FR-A1- 2 455 858
- GB-A- 1 170 748
- GB-A- 1 215 974
- GB-A- 2 265 109
- NL-A- 9 201 125
- US-A- 3 993 422

## Beschreibung

Die Erfindung betrifft eine Teigteilvorrichtung sowie eine Teigformvorrichtung zur Herstellung eines Teiglings nach Art der 4-piece-Methode gemäß dem Oberbegriff des Anspruchs 1.

Aus dem Stand der Technik sind verschiedene Ausführungsformen von Vorrichtungen zum Schneiden von Teigrollen bekannt. Vorliegend betrachtet wird diejenige Vorrichtung, mittels der eine Teigrolle quer zu deren Längsachse eingeschnitten bzw. durchtrennt werden kann.

Anwendungsgebiet einer derartigen Vorrichtung ist die Herstellung von Teiglingen zur Durchführung der so genannten 4-piece-Methode zum Backen von Toastbrot. Es ist offensichtlich, dass eine derartige Vorrichtung gleichfalls für andere Teiglinge verwendet werden kann, um andere Brote oder Gebäckstücke zu formen.

Die aus dem Stand der Technik für diese Aufgabe bekannte Vorrichtung besitzt ein Förderband, auf dem die Teigrolle mit ihrer Rollenachse quer zur Förderrichtung des Transportbands aufgelegt werden kann. Somit wird naheliegend die Teigrolle quer zu ihrer Längsachse transportiert. In welcher Art die Herstellung der Teigrolle erfolgt, ist hierbei unerheb lich, und ebenso ist es nicht von Bedeutung, in welcher Art die Teigrolle auf dem Förderband abgelegt wird. Weiterhin weist die beispielsweise aus der GB 2 265 109 A bekannte Vorrichtung zum Einschneiden der Teigrolle eine obere Halteplatte auf, welche im Transport der Teigrolle an dieser zur Anlage kommt. Aufgrund der Transportbewegung des Förderbands führt die obere stehende Platte zu einer resultierenden Drehbewegung der Teigrolle entgegen dem Uhrzeigersinn bei einer Betrachtung der Förderrichtung nach rechts.

Zum Einschneiden bzw. Durchtrennen der Teigrolle sind nunmehr an der oberen Platte drei beabstandete stehende Schneidmesser angeordnet. Deren Schneidklingen sind im Wesentlichen im Abstand eines Schneidspalts parallel oberhalb des Förderbandes angeordnet. Aufgrund der Rotationsbewegung der Teigrolle entgegen dem Uhrzeigersinn führt das Vorbeiführen der Teigrolle am Schneidmesser zu einer Schnittbewegung an der zum Förderband weisenden Schneidklinge des Schneidmessers.

Auf eine obere Halteplatte zur Unterstützung der Rotationsbewegung der Teigrolle verzichtet die GB 1 215 974 A. Hierdurch liegt die primäre Schnittkante an der entgegen der Förderrichtung liegenden Kante des Schneidmesser, wobei ansonsten übereinstimmend zur vorherigen Ausführung die Teigrolle eingeschnitten werden kann.

Bei Betrachtung der Bewegungsform der Teigrolle in Verwendung der bekannten Ausführung wird offensichtlich, dass je nach gewähltem Abstand zwischen dem Schneidmesser und dem Transportband sowie der Länge des jeweiligen Schneidmessers ein mehr oder weniger kleiner Rest als Verbindungssteg zwischen zwei Abschnitten der Teigrolle nach dem folglich teilweisen Durchtrennen stehen bleibt. Der Verbindungssteg ist hierbei maßgeblich für die prozesssichere Durchführung des nachfolgenden Umformschritts, bei welchem die einzelnen Abschnitte der Teigrolle am Verbindungssteg in der Art eines Scharniers umgelegt werden und somit die Abschnitte jeweils mit dem Abschnitt der Rollenachse parallel zueinander zum Liegen kommen sollen. Der hierdurch hergestellte Teigling eignet sich somit zur Durchführung des Backens von Toastbrot gemäß der so genannten 4-piece-Methode.

Problematisch bei der bekannten Ausführungsform zum Schneiden der Teigrolle ist es jedoch, dass der Verbindungssteg nicht zuverlässig prozesssicher erzeugt werden kann. Vielmehr führen unvermeidlich auftretende Prozessschwankungen des zu behandelnden Produkts dazu, dass der Verbindungssteg im einen Fall nahezu vollständig entfernt wird und im anderen Fall ein zu großer Verbindungssteg verbleibt. Sofern der Verbindungssteg nahezu vollständig durchtrennt ist, geht die gewünschte Scharnierwirkung für den nachfolgenden Umformprozess verloren. Sofern ein zu großer Abschnitt als Verbindungssteg stehen bleibt, führt dies ebenfalls im nachfolgenden Umformprozess zu einer Gegenwirkung beim Umformen und somit zur Deformation des gesamten Teiglings.

Weiterhin ist aus der GB 1 215 974 A eine Teigumformvorrichtung bekannt, welche die eingeschnittenen Teigrollen auf einer geneigten Bahn derart umformt, dass die einzelnen Abschnitte der Teigrolle quer Teigachse nebeneinander zum Liegen kommen. Hierzu wird die ankommende Teigrolle mittig durch ein Laufrad und an den beiden Enden der Teigrolle durch Hindernisse abgebremst. Dieses führt aufgrund der vorher eingebrachten Einschnitte zu einem Umklappen an eben jenen Einschnitten, wobei durch sich im Abstand verkleinernde Seitenwände ein vollständiges Aneinanderlegen quer zur Förderrichtung der einzelnen Abschnitte der Teigrolle bewirkt wird.

Alternativ zur vorherigen Lösung zeigt die Schrift GB 2 265 109 A eine zweistufiges Umformen für in sechs Abschnitte geteilte Teigrollen, wobei erste Haltemittel ohne präzise Ausrichtung ein erstes Einknicken an zwei Einschnitten bewirken und nachfolgend die ansatzweise umgeklappen Abschnitte der Teigrollen vergleichbar vorheriger Ausführung vollends parallel aneinanderliegend verbracht werden.

Weiterhin ist es aus der US 3,993,422 A bekannt, dass Teigrollen mittels rotierender Trennmesser in einzelne getrennte Abschnitte geschnitten werden können. Hierzu werden die Teigrollen auf einem Förderband transportiert und passieren die auf einer gemeinsamen Drehachse angeordneten Trennmesser.

Aufgabe der vorliegenden Erfindung ist es daher, eine Teigteilvorrichtung zur Verfügung zu stellen, mittels der eine Teigrolle bis auf einen Restabschnitt zuverlässiger und prozesssicherer eingeschnitten werden kann, als dies bisher möglich ist.

Die gestellte Aufgabe wird durch eine erfindungsgemäße Ausführungsform einer Teigteilvorrichtung nach dem Anspruch 1 gelöst. Eine Teigformvorrichtung mit einer erfindungsgemäßen Teigteilvorrichtung und nachfolgender Faltvorrichtung wird im Anspruch 9 angegeben. Ein erfindungsgemäßes Verfahren zur Durchführung des Schneidens von Teigrollen ist im Anspruch 13 angegeben.

Vorteilhafte Ausführungsformen sind Gegenstand der Unteransprüche.

Eine gattungsgemäße Teigteilvorrichtung dient zunächst einmal zur Herstellung eines Teiglings zum Backen von Toastbrot oder dergleichen. Hierbei stellt die Teigteilvorrichtung einen Abschnitt im gesamten Herstellungsprozess zur Bildung des Teiglings dar. Die Teigteilvorrichtung umfasst hierbei ein unteres Förderband, welches in einer Förderrichtung mit einer unteren Bandgeschwindigkeit bewegt werden kann. Nicht notwendigerweise, jedoch in bevorzugter Ausführung ist hierbei die untere Bandgeschwindigkeit variabel verstellbar.

Die Ausführungsform des Förderbands ist hierbei unerheblich. Zumindest wird bestimmungsgemäß eine Teigrolle auf einen Anfang des Förderbands aufgelegt. Erforderlich zur zweckentsprechenden Verwendung der Teigteilvorrichtung ist es hierbei, dass bei Auflage der Teigrolle deren Rollenachse quer zur Förderrichtung ausgerichtet wird, welches durch vorhergehende Anlagenumfänge sicherzustellen ist. Weiterhin umfasst die gattungsgemäße Teigteilvorrichtung zumindest zwei oberhalb des unteren Förderbands angeordnete vordere Trennmesser, mittels denen die Teigrolle beim Passieren eingeschnitten wird. Ein zwischen dem Trennmesser und dem Förderband variabel einstellbarer vorderer Trennspalt bestimmt maßgeblich, inwieweit die Teigrolle vom vorderen Trennmesser durchschnitten wird, wobei ein verbleibender vorderer Verbindungssteg nicht durchtrennt wird.

Erfindungsgemäß werden nunmehr anstelle der stehenden Trennmesser um eine vordere Drehachse rotierende vordere Trennmesser eingesetzt. Durch die Verwendung rotierender Trennmessers anstelle stehender Trennmessers ergeben sich neue Einstellungsmöglichkeiten zur Optimierung des Prozesses des Einschneidens der Teigrolle an einem vorderen Trennschnitt. Hierbei sind die vorderen Trennmesser auf einer gemeinsamen vorderen Drehachse beabstandet zueinander zu positionieren.

Weiterhin ist erfindungsgemäß vorgesehen, dass zu den beiden vorderen Trennmessern weiterhin zwischen diesen ein hinteres rotierendes Trennmesser eingesetzt wird. Dieses ist hierbei auf einer hinteren Drehachse anzuordnen, wobei die Anordnung der hinteren Drehachse zunächst keine geometrische Zuordnung in Relation zur vorderen Drehachse beinhaltet, sondern lediglich unabhängig von der vorderen Drehachse positioniert werden kann. Vielmehr kann das hintere Trennmesser in Förderrichtung betrachtet sowohl an gleicher Position wie die vorderen Trennmesser angeordnet sein als auch davor oder dahinter. Weiterhin kann die hintere Drehachse sowohl unterhalb als auch oberhalb des unteren Förderbands angeordnet werden. Zumindest wird durch das hintere Trennmesser gleichfalls wie bei den vorderen Trennmessern die Teigrolle beim Passieren desselben zumindest abschnittsweise unter Erhalt eines hinteren Trennschnitts durchtrennt.

Durch diese besonders vorteilhafte Gestaltung mit zwei vorderen Trennmessern und einem hinteren Trennmesser, welche hierbei jeweils rotierend sind, wird die so genannte 4-piece-Methode besonders vereinfacht und prozesssicher gestaltet. Besonders die Stärke des Verbindungssteges kann in dieser Ausführung wesentlich besser eingehalten werden, als dies mit bekannten Ausführungen möglich ist.

Hierbei ist es nicht zwingend erforderlich, dass beide Trennmesser auf einer gemeinsamen Welle oder dergleichen angeordnet sind. Vielmehr ist es hinreichend, wenn die beiden vorderen Trennmesser eine auf einer geometrischen Linie befindliche vordere Drehachse aufweisen. Somit können zwei beabstandete, im Wesentlichen identische Trennschnitte an der Teigrolle angebracht werden, wobei in beiden Fällen der im Wesentlichen gleiche vordere Verbindungssteg verbleibt. Es ist naheliegend, dass für diesen Fall die beiden vorderen Trennmesser mit übereinstimmendem Durchmesser auszuführen sind und vorzugsweise identisch sind. Hierbei sind weiterhin vorzugsweise beide Trennmesser mit gleicher Drehgeschwindigkeit anzutreiben, wozu vorteilhaft beide Trennmesser zugleich auf einer Welle angetrieben werden.

Zur Optimierung des Prozesses hinsichtlich des Schnittverhaltens beim Schneiden der Teigrolle sind in vorteilhafter Ausführungsform das vordere Trennmesser und/oder das hintere Trennmesser in seiner Drehgeschwindigkeit variabel einstellbar.

Besonders vorteilhaft ist es hierbei, wenn das vordere und/oder hintere Trennmesser in Förderrichtung rotiert. Hierdurch wird beim Passieren der Teigrolle ein ziehender Schnitt beim Schneiden der Teigrolle ermöglicht. Dies begünstigt in besonderem Maße eine schonende und möglichst verformungsarme Verarbeitung der Teigrolle. Die Bewegung in Förderrichtung bezieht sich hierbei auf die Umfangsbewegung des Trennmessers im Kontakt mit der Teigrolle. Naheliegend ist, dass auf der der Drehachse gegenüberliegenden Seite eine entgegengesetzte Bewegungsrichtung vorliegt.

Besonders vorteilhaft ist die erfindungsgemäße Ausführungsform der Teigteilvorrichtung, wenn oberhalb des unteren Förderbands ein zumindest zweiteiliges oberes Förderband eingesetzt wird. Dieses ist hierbei vorzugsweise im Abstand zum unteren Förderband variabel einstellbar. Zumindest ist sicherzustellen, dass das obere Förderband an der zu verarbeitenden Teigrolle anliegt.

Abweichend zur vorherigen gattungsgemäßen Ausführungsform wird ausdrücklich zur Erfindung gehörend diejenige Variante einbezogen, welche eine Anordnung des vorderen Trennmessers unterhalb des unteren Förderbandes aufweist, sofern ein oberes Förderband vorhanden ist. Es ist offensichtlich, dass für diesen Fall das untere Förderband zumindest zweiteilig seitlich des vorderen Trennmessers auszuführen ist, wobei der verbleibende vordere Verbindungssteg definiert wird durch einen vorderen Trennspalt zum oberen Förderband. Somit wird in mit der vorherigen Beschreibung übereinstimmender Weise ein abschnittsweises Schneiden der Teigrolle ermöglicht.

Gleichfalls wie bei dem unteren Förderband ist es ebenso vorteilhaft, wenn die obere Bandgeschwindigkeit des oberen Förderbands variabel einstellbar ist. Diese kann im einfachsten Fall an die untere Bandgeschwindigkeit über ein Getriebe gekoppelt sein. Besonders vorteilhaft ist es jedoch, wenn die obere Bandgeschwindigkeit unabhängig von der unteren Bandgeschwindigkeit geregelt werden kann.

In einer vorteilhaften Weise ist die obere Bandgeschwindigkeit gleich der unteren Bandgeschwindigkeit. Die übereinstimmende Bandgeschwindigkeit führt zu einer rein translatorischen Bewegung der Teigrolle zwischen unterem und oberem Förderband ohne Auftreten einer Drehbewegung. Somit sind in besonders einfacher Weise die Abmessung und die Lage des Verbindungsstegs festgelegt. Ebenso kann es durch die Verwendung des oberen Förderbands nicht zu einer unkontrollierten Rollbewegung der Teigrolle wie bei einem fehlenden oberen Förderband kommen.

Besonders vorteilhaft ist jedoch die Ausführung mit einer oberen Bandgeschwindigkeit, welche größer als die untere Bandgeschwindigkeit ist. Hierdurch wird die Teigrolle beim Transport in der Förderrichtung zugleich in eine Drehbewegung versetzt. Bei Betrachtung einer nach rechts gerichteten Förderrichtung führen somit die verschiedenen Bandgeschwindigkeiten zu einer Drehbewegung der Teigrolle im Uhrzeigersinn. Diese Bewegung der Teigrolle begünstigt vorteilhaft die Schnittbewegung der in Gegenrichtung rotierenden vorderen Trennmesser.

Im Falle der Ausführung mit unterhalb des unteren Förderbandes liegender vorderer Drehachse kehren sich die Verhältnisse naheliegend um, so dass vorzugsweise die untere Bandgeschwindigkeit größer als die obere Bandgeschwindigkeit ist, so dass gleichfalls eine Rotationsbewegung der Teigrolle entgegen der Drehrichtung des vorderen Trennmessers vorliegt.

Hinsichtlich der Anordnung des hinteren Trennmessers in Relation zum unteren Förderband ergeben sich verschiedene Ausführungsvarianten.

In einer ersten vorteilhaften Variante wird die hintere Drehachse gleichfalls wie die vordere Drehachse oberhalb des unteren Förderbands angeordnet. Weiterhin erfolgt die Positionierung des hinteren Trennmessers dergestalt, dass das hintere Trennmesser zumindest bis nahe an das untere Förderband heranreicht. Je nach Ausführung der Teigteilvorrichtung mit oder ohne oberes Förderband und in Abhängigkeit der Bandgeschwindigkeiten vom unteren und oberen Förderband führt eine vorhandene Drehbewegung der Teigrolle beim Transport in Förderrichtung auch bei einem vorhandenen Restspalt zwischen Trennmesser und Förderband zu einem vollständigen Durchtrennen der Teigrolle. Insofern ist es nicht zwingend erforderlich, dass das hintere Trennmesser zum vollständigen Durchtrennen der Teigrolle unter Bildung eines hinteren Trennschnitts berührend bis an das untere Förderband heranreichen muss.

In einer zweiten Ausführungsvariante wird die hintere Drehachse nunmehr unterhalb des unteren Förderbands angeordnet. Gleichfalls wird eine vollständige Durchtrennung der Teigrolle vorteilhaft erreicht, wenn das hintere Trennmesser in dieser Ausführungsform analog zur ersten Variante zumindest nahe bis an das obere Förderband heranreicht.

Dennoch ist es unbenommen, ebenso eine dritte Ausführungsform zu wählen, bei welcher das hintere Trennmesser sowohl eine Anlagefläche eines zumindest zweiteiligen oberen Förderbands und eine Auflagefläche eines zumindest zweiteiligen unteren Förderbands durchschneidet. Es ist zum Durchtrennen unerheblich, ob hierbei die hintere Drehachse oberhalb des oberen Förderbandes oder unterhalb des unteren Förderbandes angeordnet ist. Zumindest sind naheliegend hierbei sowohl das untere als auch das obere Förderband zumindest zweiteilig mit zwischen liegendem hinterem Trennmesser auszuführen. Durch diese Ausführung wird auf jeden Fall sichergestellt, dass die Teigrolle am hinteren Trennschnitt vollständig durchtrennt wird.

Besonders vorteilhaft ist eine vierte Ausführungsvariante, bei welcher gleichfalls wie bei der ersten Variante wiederum die hintere Drehachse oberhalb des unteren Förderbands angeordnet wird, jedoch das hintere Trennmesser mit einem variablen hinteren Trennspalt oberhalb des unteren Förderbands angeordnet ist. Somit wird gleichfalls wie beim vorderen Trennmesser ebenso am hinteren Trennmesser die vorbei transportierte Teigrolle bis auf einen verbleibenden hinteren Verbindungssteg durchtrennt.

In einer weiteren vorteilhaften fünften Alternative wird die hintere Drehachse nunmehr erneut wie bei der zweiten Variante unterhalb des Förderbands angeordnet, wobei jedoch analog zur vierten Variante das hintere Trennmesser mit einem variabel verstellbaren hinteren Trennspalt unterhalb des oberen Förderbands angeordnet ist. Analog wird in dieser Ausführungsvariante vorteilhaft die Teigrolle bis auf einen verbleibenden hinteren Verbindungssteg durchtrennt.

In besonders bevorzugter Ausführung ist die Verstellbarkeit des hinteren Trennmessers der vierten und fünften Variante derart ausgeführt, dass der verbleibende hintere Trennspalt so weit reduziert werden kann, dass wie in der ersten und zweiten Variante ein vollständiges Durchtrennen möglich wird.

Im Fall der vollständigen Durchtrennung der Teigrolle vom hinteren Trennmesser ist die Anordnung des hinteren Trennmessers in Förderrichtung betrachtet relativ zum vorderen Trennmesser zunächst beliebig. Somit kann das hintere Trennmesser an gleicher Stelle innerhalb der Transportstrecke wie die vorderen Trennmesser angeordnet werden, so dass eine sehr kurze Baulänge erreicht wird. Sofern das untere Förderband zumindest zweiteilig ausgeführt wird, kann das hintere Trennmesser unterhalb des unteren Förderbands an gleicher Stelle wie die vorderen Trennmesser angeordnet werden. Alternativ kann mit zweiteiligem unterem Förderband ebenso das hintere Trennmesser auf einer gemeinsamen Welle mit den vorderen Trennmessern mit somit übereinstimmender vorderer und hinterer Drehachse angeordnet werden, wozu es naheliegend eines größeren Durchmessers des hinteren Trennmessers in Relation zum vorderen Trennmesser bedarf.

"An gleicher Stelle innerhalb der Transportstrecke" bezieht sich hierbei auf die Förderrichtung, d.h. dass das obere und untere Trennmesser zugleich auf die Teigrolle einwirken können.

Sofern ein verbleibender hinterer Verbindungssteg gefordert bzw. gewünscht wird und das hintere Trennmesser oberhalb des unteren Förderbands angeordnet wird, ist es besonders vorteilhaft, wenn in Förderrichtung betrachtet das hintere Trennmesser in hinreichendem Abstand vor dem vorderen Trennmesser oder nachfolgend dem vorderen Trennmesser positioniert wird. Somit wird es ermöglicht, bei einer möglichen Drehbewegung der Teigrolle den vorderen Verbindungssteg in Relation zum hinteren Verbindungssteg an abweichender Position anbringen zu können.

Bei einer Lage der hinteren Drehachse unterhalb des unteren Förderbands kann in besonders vorteilhafter Weise die Positionierung des hinteren Trennmessers an gleicher Stelle innerhalb der Transportstrecke wie das vordere Trennmesser erfolgen. Somit ist es vorteilhaft möglich, einen verbleibenden hinteren Verbindungssteg an der dem vorderen Verbindungssteg über die Rollenachse gegenüberliegenden Seite zu erzeugen.

Ein vorteilhaftes Schneiden der Teigrolle durch rotierende Trennmesser wird erzielt, wenn die Umfangsgeschwindigkeit des vorderen Trennmessers und/oder hinteren Trennmessers größer als die untere Bandgeschwindigkeit und kleiner als die zweifache untere Bandgeschwindigkeit ist. Innerhalb dieses Geschwindigkeitsbereichs wird ein prozesssicheres Schneiden der Teigrolle ermöglicht, wobei es besonders vorteilhaft ist, die Umfangsgeschwindigkeit derart einzustellen, dass diese circa dem 1,05-fachen der oberen Bandgeschwindigkeit entspricht. Somit wird mit einem langsamen schonenden Schnitt ein zumindest abschnittsweises Trennen der Teigrolle ermöglicht.

Weiterhin ist es besonders vorteilhaft, wenn die obere Bandgeschwindigkeit relativ zur unteren Bandgeschwindigkeit derart regelbar ist, dass der vordere Verbindungssteg bei Abgabe der Teigrolle an einem Ende des Förderbands eine definierte Solllage relativ zur Rollenachse aufweist. Das heißt, durch die Relativgeschwindigkeiten der unteren und oberen Bandgeschwindigkeit wird eine Drehbewegung der Teigrolle hervorgerufen, welche folglich eine Rotation des vorderen Verbindungsstegs um die Rollenachse bewirkt. Durch die entsprechende Regelung der oberen Bandgeschwindigkeit kann somit in einfacher und vorteilhafter Weise die Lage des vorderen Verbindungsstegs am Ende der Teigteilvorrichtung bestimmt werden.

Dies ist insbesondere vorteilhaft bei Verwendung der so genannten 4-piece-Methode, da hier der Verbindungssteg für die weitere Verarbeitung in besonders bevorzugter Lage in Förderrichtung hinter der Rollenachse liegt, d.h. bei einer nach rechts laufenden Förderrichtung auf 9 Uhr.

Weiterhin ist es besonders vorteilhaft, wenn in der Ausführung mit vorderem und hinterem Verbindungssteg unter Berücksichtigung des Abstands zwischen dem vorderen und dem hinteren Trennmesser die obere Bandgeschwindigkeit derart regelbar ist, dass der vordere Verbindungssteg bezüglich der Rollenachse auf ungefähr der gegenüberliegenden Seite liegt. Das heißt, dass an der eingeschnittenen Teigrolle der vordere Verbindungssteg um 180° versetzt zum hinteren Verbindungssteg vorliegt. Dies begünstigt vorteilhaft die nachfolgende Umformung bei der so genannten 4-piece-Methode.

Weiterhin ist es besonders vorteilhaft, wenn die Teigteilvorrichtung um eine Faltvorrichtung zu einer Teigformvorrichtung erweitert wird. Hierzu weist die Faltvorrichtung in der Anordnung im Anschluss an die Teigteilvorrichtung zumindest ein Förderband auf, auf welchem die von der Teigteilvorrichtung eingeschnittene Teigrolle transportiert wird. Diesbezüglich ist es zunächst unerheblich, ob die Teigteilvorrichtung mit der Faltvorrichtung ein gemeinsames unteres Förderband aufweist oder ob die Faltvorrichtung ein von der Teigteilvorrichtung unabhängiges Förderband besitzt oder ob beispielsweise das untere Förderband der Teigteilvorrichtung ein erstes Förderband bildet und die Faltvorrichtung nachfolgend ein zweites Förderband aufweist.

Zumindest weist die Faltvorrichtung im Wesentlichen aufrecht ausgerichtete, oberhalb des Förderbands angeordnete Elemente zur Umformung der Teigrolle auf. Diese umfassen zunächst einmal einen mittig angeordneten Umformanschlag. Bei Betrachtung der Förderrichtung unter Berücksichtigung des vorhergehenden hinteren Trennschnitts am hinteren Trennmesser befindet sich der Umformanschlag entsprechend in dessen Flucht, d.h. naheliegend in der Mitte zur ankommenden Teigrolle. Weiterhin umfassen die zur Umformung erforderlichen Elemente zwei über die Mitte symmetrisch angeordnete Faltmittel.

Hierbei ist es besonders vorteilhaft, wenn der Umformanschlag eine entgegen der Förderrichtung gerichtete keilförmige Gestalt aufweist.

Hierdurch wird bei Auftreffen der an mittiger Position durchgeschnittenen oder zumindest eingeschnittenen Teigrolle vorteilhaft ein beidseitiges Klappen der Teigrollen begünstigt.

Die Faltmittel werden in einer vorteilhaften Ausführung von in Förderrichtung bewegten Umformriemen gebildet, deren Abstand zueinander in Förderrichtung abnimmt. An den Umformriemen kommen zunächst die beiden Außenenden der Teigrolle zur Anlage, wobei durch Faltung an den vorderen Verbindungsstegen eine entsprechende Umformung der Teigrolle erfolgt. Diese mündet in eine Umlage der einzelnen Abschnitte der Teigrolle, mit Ausrichtung der jeweiligen Abschnitte der Rollenachse in paralleler Lage.

Besonders vorteilhaft ist die Ausführung der Faltmittel durch eine Reihe von aufeinander folgenden Umformrollen. Die beiden Reihen sind hierbei symmetrisch über die Mitte der Faltvorrichtung gegenüberliegend angeordnet, wobei gleichfalls wie in der Ausführung mit Umformriemen die Reihe sich in der Förderrichtung erstreckt und die Umformrollen der beiden Reihen fortlaufend einen kleineren Abstand zueinander aufweisen. Die Drehachse der Umformrollen steht hierbei senkrecht zum Förderband. Vorteilhaft ist zum einen, dass die einzelnen Umformrollen nicht nur geradlinig angeordnet werden können, sondern gleichfalls die Reihe der Umformrollen einen bogenförmigen Verlauf nehmen kann, welcher hierbei im Gegensatz zum Umformriemen nicht nur konvex, sondern auch konkav geformt sein kann.

Besonders vorteilhaft ist hierbei die verringerte Teig- und Schmutzanhaftung an den Umformrollen sowie die bessere Reinigbarkeit. Ebenso wird es vermieden, dass sich innerhalb der um senkrechte Achsen umlaufenden Umformriemen Teigreste und Schmutz ansammeln, welche dort nur aufwendig entfernt werden können, jedoch jederzeit partikelweise auf das darunter umlaufende Förderband fallen und die Teiglinge kontaminieren können.

In vorteilhafter Ausführung sind alle Umformrollen als Faltmittel angetrieben, wobei vorzugsweise ein angetriebener Zahnriemen wiederum alle Umformrollen zugleich antreibt.

Weiterhin ist es unbenommen, in der Faltvorrichtung eine Umformung zunächst mittels einer symmetrischen Reihe von Umformrollen durchzuführen und im Anschluss mittels einer symmetrischen Anordnung von senkrecht ausgerichteten Förderbändern die Umformung abzuschließen bzw. eine Rückformung zu verhindern.

Besonders vorteilhaft ist die Ausführung der Faltvorrichtung mit zwei aufeinander folgenden getrennten Förderbändern. Hierbei ist es unerheblich, ob ein erstes Förderband vom unteren Förderband der Teigteilvorrichtung gebildet wird. Zumindest ist es vorteilhaft, wenn das erste Förderband mit einer dem unteren Förderband entsprechenden Geschwindigkeit bewegt wird. Hingegen ist die Geschwindigkeit des zweiten folgenden Förderbandes der Faltvorrichtung deutlich geringer zu wählen. Hierzu sollte die Geschwindigkeit des ersten Förderbandes zumindest 50% größer sein als die Geschwindigkeit des zweiten Förderbandes. Besonders bevorzugt wird jedoch eine zumindest doppelt so hohe Geschwindigkeit des vorlaufenden ersten Förderbandes im Gegensatz zum folgenden zweiten Förderband.

Vorteilhaft sind Geschwindigkeiten von beispielsweise 50 m/min für das untere Förderband der Teigteilvorrichtung sowie das erste Förderband der Faltvorrichtung und 20 m/min für das zweite Förderband der Faltvorrichtung.

Vorteilhaft an dieser Ausführung ist, dass beim Auftreffen der Teigrollen an dem Umformanschlag bzw. den Faltmitteln aufgrund der hohen kinetischen Energie eine Art Umklappen an eben jenem Umformanschlag bzw. Faltmittel und den Verbindungsstegen erfolgt und hierbei eine Relativbewegung über dem Förderband der Faltvorrichtung einsetzt. Die Geschwindigkeitsdifferenz stellt sicher, dass ein Übergang von der Haftreibung der auf dem Förderband aufliegenden Teigrolle in eine Gleitreibung beim Umformen stattfindet. Hingegen würde eine übereinstimmende Geschwindigkeit bei hoher Haftreibung die Gefahr bergen, dass die Teigrolle trotz Faltmittel und Verbindungssteg als Scharnier durch die Faltvorrichtung durchgequetscht wird.

Besonders vorteilhaft ist es in dieser Ausführung, wenn die Trennstelle zwischen dem ersten und dem zweiten Förderband im Anfangsbereich von Umformanschlag und Faltmittel angeordnet ist. Hierbei kann die Trennstelle sowohl unmittelbar vor dem Umformanschlag bzw. Faltmittel angeordnet sein als auch bevorzugt unterhalb des Umformanschlags sowie des Faltmittels. Aufgrund der von der Trennstelle gebildeten Lücke in der Auflage der Teigrolle bremst somit das an dieser Stelle fehlende Förderband nicht negativ den Umformvorgang. Zum anderen kann der teilweise umgeformte Teigling mit angepasster geringerer Geschwindigkeit in Form gebracht, d.h. vollständig achsparallel umgeformt werden, und an nachfolgende Anlagenumfänge übergeben werden.

Zur erfindungsgemäßen Teigteilvorrichtung wird ein neues Verfahren zum Einschneiden einer Teigrolle vorgestellt, wobei insbesondere eine Teigteilvorrichtung nach der vorstehenden Beschreibung eingesetzt wird. Hierbei wird eine auf einem unteren Förderband abgelegte Teigrolle in eine Förderrichtung transportiert. Maßgeblich ist das abschnittsweise Durchtrennen der Teigrolle mittels zweier rotierender vorderer Trennmesser, welche hierbei aufgrund der entsprechenden Wahl der Umfangsgeschwindigkeit der Trennmesser einen ziehenden Schnitt vollziehen. Hierdurch wird die Teigrolle abschnittsweise unter Erhalt eines vorderen Trennschnitts durchtrennt, wobei ein nicht durchtrennter Verbindungssteg verbleibt. Maßgeblich für das erfindungsgemäße Verfahren ist der Einsatz eines weiteren hinteren Trennmessers, mittels dem unabhängig von den vorderen Trennmessern ebenso zumindest abschnittweise die Teigrolle durchgeschnitten wird.

Hierbei ist es besonders vorteilhaft, wenn mittels eines oberen Förderbands in Anlage an der Teigrolle diese in Rotation versetzt wird. Somit wird es ermöglicht, dass der verbleibende Verbindungssteg eine vorbestimmte Sollstellung relativ zur Rollenachse der Teigrolle aufweist. Hierbei ist es besonders vorteilhaft, wenn die Teigrolle bei einer nach rechts gerichteten Förderrichtung eine Drehbewegung im Uhrzeigersinn vollzieht. Dies begünstigt sowohl die Positionierung des Verbindungsstegs als auch insbesondere die Schnittbewegung durch das vordere Trennmesser.

Weiterhin ist es besonders vorteilhaft, wenn die Teigrolle nach dem Einschneiden durch die Teigteilvorrichtung mittels einer Faltvorrichtung geformt wird. Zunächst werden vier Abschnitte der Teigrolle gebildet, welche entweder vollständig voneinander getrennt sind oder zumindest in zwei Fällen mittels eines vorderen Verbindungsstegs miteinander verbunden sind. Durch das Schwenken der Abschnitte gegeneinander werden die vier Abschnitte derart positioniert, dass die Rollenachsen der Abschnitte im Wesentlichen parallel zueinander liegen.

In den nachfolgenden Figuren werden beispielhafte Ausführungsformen einer Teigteilvorrichtung skizziert sowie ein Beispiel einer Faltvorrichtung.

Es zeigen:
- Fig. 1: eine erstes Ausführungsbeispiel einer Teigteilvorrichtung mit vorderem und hinterem Trennmesser an gleicher Stelle in einer Seitensicht;
- Fig. 2: eine weitere Ausführungsvariante mit hinterem Trennmesser nachfolgend dem vorderen Trennmesser zum vollständigen Durchtrennen in einer Seitensicht;
- Fig. 3: eine Draufsicht zur Ausführung aus Fig. 2;
- Fig. 4: eine weiteres Ausführungsbeispiel mit weiterhin oberem Förderband in einer Seitensicht;
- Fig. 5: eine Draufsicht zur Ausführung aus Fig. 4;
- Fig. 6: eine weitere Ausführungsvariante zur Erzeugung eines vorderen und eines hinteren Verbindungsstegs in einer Seitensicht;
- Fig. 7: eine Draufsicht zur Ausführung aus Fig. 6;
- Fig. 8: eine weiteres Ausführungsbeispiel mit einem unterhalb des unteren Förderbands angeordneten hinteren Trennmesser in einer Seitensicht;
- Fig. 9: ein erstes Ausführungsbeispiel für eine Faltvorrichtung mit Umformriemen;
- Fig. 10: ein zweites Ausführungsbeispiel für eine Faltvorrichtung mit Umformrollen.

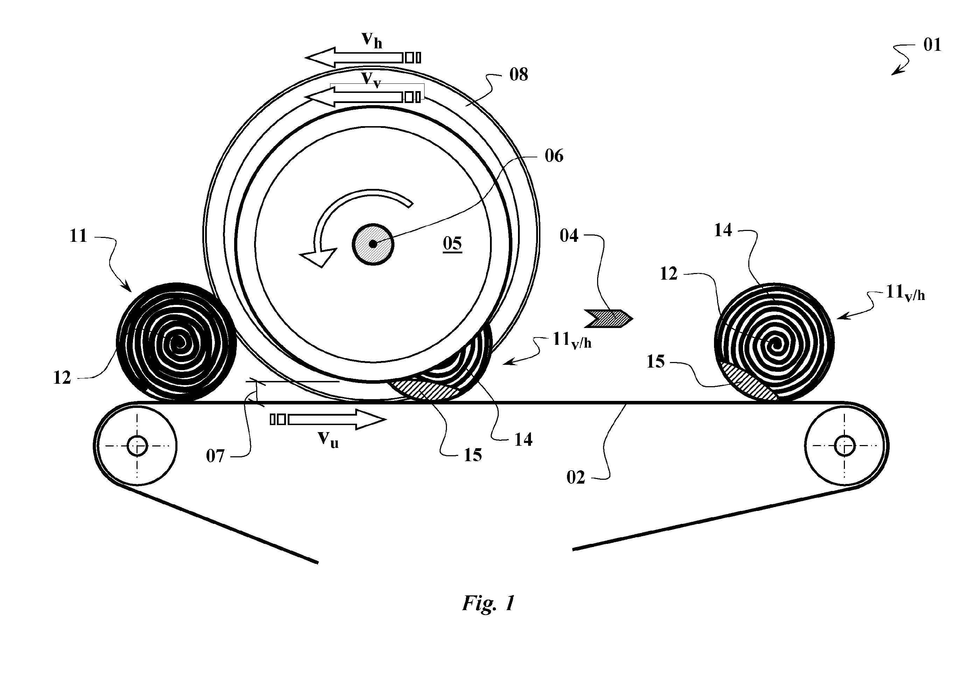

In der **Figur 1** wird ein erstes einfaches Ausführungsbeispiel für eine erfindungsgemäße Teigteilvorrichtung 01 mit einem vorderen Trennmesser 05 und einem hinterem Trennmesser 08 skizziert. Zu erkennen ist das unterseitig angeordnete untere Förderband 02. Auf diesem 02 aufliegend werden die Teigrollen 11 transportiert. Diese 11 sind hierbei derart auf dem unteren Förderband 02 aufgelegt, dass sich die Rollenachse 12 der Teigrolle 11 quer zur Förderrichtung 04 des Transportbands 02 befindet. Das Förderband 02 bewegt sich hierbei mit einer unteren Bandgeschwindigkeit vᵤ.

Zum Erhalt des gewünschten vorderen Verbindungsstegs 15 an der abschnittsweise geschnittenen Teigrolle 11_{v/h} mit dem dargestellten vorderen Trennschnitt 14 sowie dem hinten liegenden (nicht dargestellten) hinteren Trennschnitt 16 befindet sich das vordere Trennmesser 05 rotierend um die vordere Drehachse 06 mit einem vorderen Trennspalt 07 oberhalb des unteren Förderbands 02. Hierbei rotiert das vordere Trennmesser 05 entgegen dem Uhrzeigersinn und somit entspricht die Bewegungsrichtung des Trennmessers 05 an dessen Umfang der Förderrichtung 04 beim Schneiden der Teigrolle 11. Aufgrund der freien Beweglichkeit der Teigrolle 11 in diesem Ausführungsbeispiel ist insbesondere die Lage und unter anderem auch die exakte Ausführung des Verbindungsstegs 15 nicht sichergestellt, wobei dennoch die Breite des Verbindungsstegs 15 durch Variation der Größe des vorderen Trennspalts 07 auch durch diese erfindungsgemäße Ausführungsform gut einstellbar ist.

Das hintere Trennmesser 08 befindet sich hierbei zwischen zwei vorderen Trennmessern 05 an ungefähr gleicher Stelle innerhalb der Transportstrecke bei einer Betrachtung der Förderrichtung 04. Hierbei ist das hintere Trennmesser 08 derart positioniert, dass ein vollständiges Durchtrennen der Teigrolle 11 mit einem hinteren Trennschnitt 16 erfolgt. Somit kann die gesamte Teigteilvorrichtung 01 kurz bauend ausgeführt werden. Die Wahl der Geschwindigkeit der Trennmesser 05 bzw. 08 richtet sich insbesondere nach der unteren Bandgeschwindigkeit vᵤ des unteren Förderbands 02.

Hierbei sollte die Umfangsgeschwindigkeit vᵥ des vorderen Trennmessers bzw. die Umfangsgeschwindigkeit vₕ des hinteren Trennmessers 08 geringfügig größer als die untere Bandgeschwindigkeit vᵤ gewählt werden.

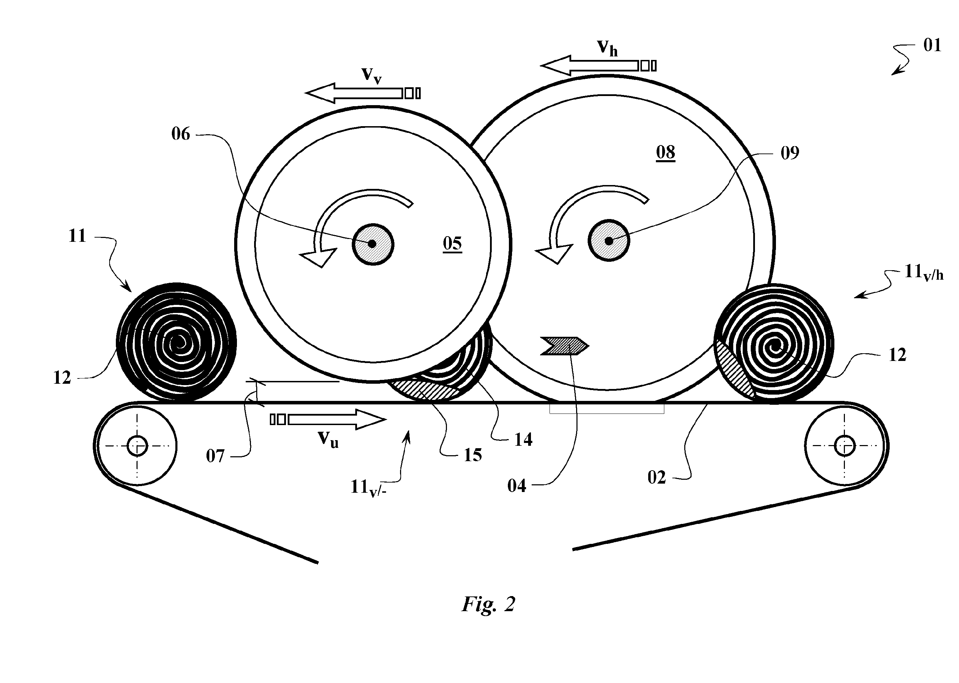

In der **Figur 2** wird eine alternative Ausführungsform einer Teigteilvorrichtung 01 skizziert, bei welcher im Vergleich zur Fig. 1 nunmehr das hintere Trennmesser 08 in Förderrichtung 14 versetzt angeordnet ist. Weiterhin wird in diesem Ausführungsbeispiel skizziert, dass das hintere Trennmesser 08 die Auflageebene des unteren Förderbands 02 durchschneidet. Somit wird in jedem Fall gewährleistet, dass die Teigrolle 11 vollständig mit einem hinteren Trennschnitt 16 durchtrennt wird.

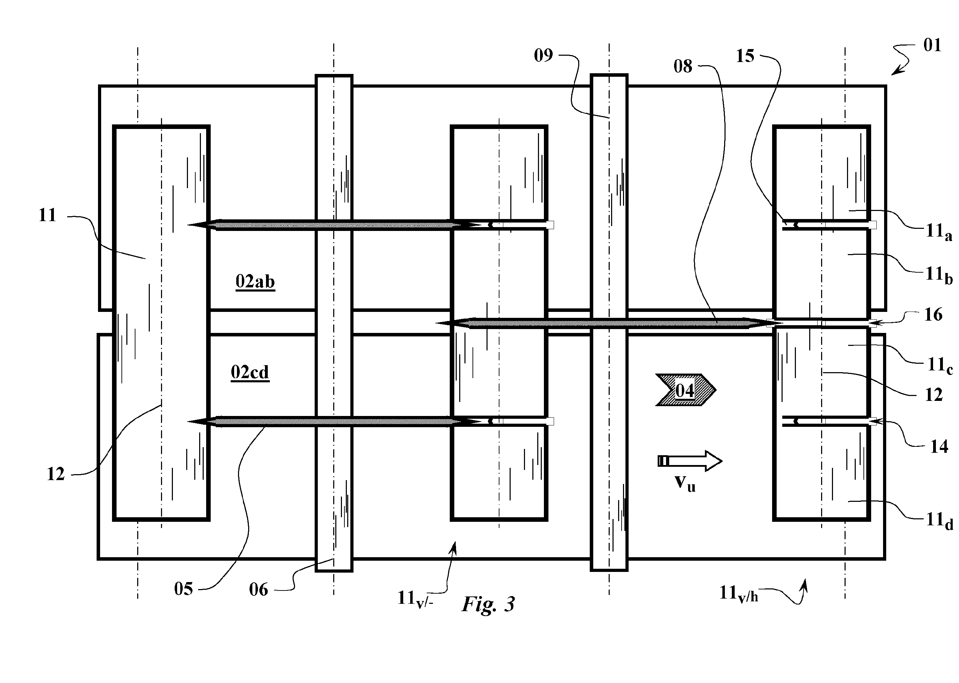

Hierzu skizziert **Figur 3** eine Draufsicht zur beispielhaften Ausführungsform der Teigteilvorrichtung 01 aus Fig. 2. Zu erkennen ist zunächst einmal die Ausführung des unteren Förderbands 02 bestehend aus zwei Abschnitten 02ab und 02cd. Am Anfang des Förderbands 02 wird die Teigrolle 11 mit der Rollenachse 12 quer zur Förderrichtung 04 aufgelegt. In diesem Ausführungsbeispiel erfolgt zunächst das Einschneiden der Teigrolle 11 mit den beiden im Abstand zueinander auf einer gemeinsamen Drehachse 06 angeordneten vorderen Trennmessern 05. Hierbei entsteht jeweils ein vorderer Trennschnitt 14 unter Verbleib des vorderen Verbindungsstegs 15. Nachfolgend dem Einschneiden mit den vorderen Trennmessern 05 erfolgt das Durchtrennen der eingeschnittenen Teigrolle 11_{v/} - mit dem hinteren Trennmesser 08 positioniert auf der hinteren Drehachse 09. Im Ergebnis entsteht eine eingeschnittene Teigrolle 11_{v/h} umfassend vier Abschnitte 11a, 11b, 11c, 11d.

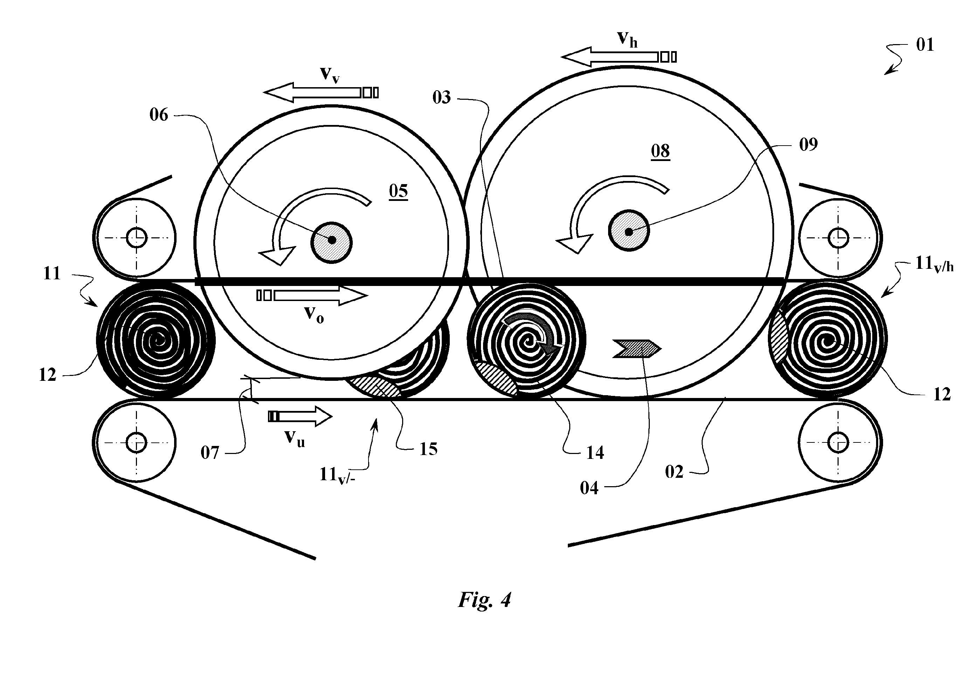

In der **Figur 4** wird nunmehr die Teigteilvorrichtung 01 um ein oberes Förderband 03 ergänzt. Im Vergleich zur Ausführung aus Fig. 2 weist wiederum die Teigteilvorrichtung 01 ein unteres Förderband 02, ein vorderes Trennmesser 05 im Abstand eines vorderen Trennspalts 07 oberhalb des unteren Förderbands 02 sowie ein hinteres Trennmesser 08 nachfolgend dem vorderen Trennmesser 05 auf, welches 08 eine vollständige Durchtrennung der Teigrolle 11 bewirkt. Maßgeblich bei dieser Ausführungsform der Teigteilvorrichtung ist der Einsatz des oberen Förderbands 03, wodurch eine gezielte Positionierung der Teigrolle 11 ermöglicht wird. Im Gegensatz zu vorherigen Ausführungsformen, bei welchen die exakte Lage der Teigrolle 11 um die Rollenachse 12 nicht bestimmbar ist, kann hingegen in dieser Ausführungsform durch die Anlage der Teigrolle 11 sowohl am unteren Förderband als auch am oberen Förderband die exakte Drehbewegung der Teigrolle 11 beeinflusst werden.

Bei übereinstimmenden Bandgeschwindigkeiten zwischen der unteren Bandgeschwindigkeit vᵤ des unteren Förderbands 02 und der oberen Bandgeschwindigkeit vₒ des oberen Förderbands 03 erfolgt naheliegend der Transport der Teigrolle 11 rein translatorisch. Vorteilhaft wird jedoch das obere Förderband 03 mit einer größeren Bandgeschwindigkeit vₒ in Bezug auf die untere Bandgeschwindigkeit vᵤ bewegt. Hierdurch wird eine Drehbewegung der Teigrolle 11 im Uhrzeigersinn bewirkt (bei Förderrichtung 04 nach rechts). Hierdurch wird es insbesondere ermöglicht, die Position des vorderen Verbindungsstegs 15 bei Abgabe der Teigrolle 11_{v/h} an gewünschter Position relativ zur Rollenachse 12 zu bewegen.

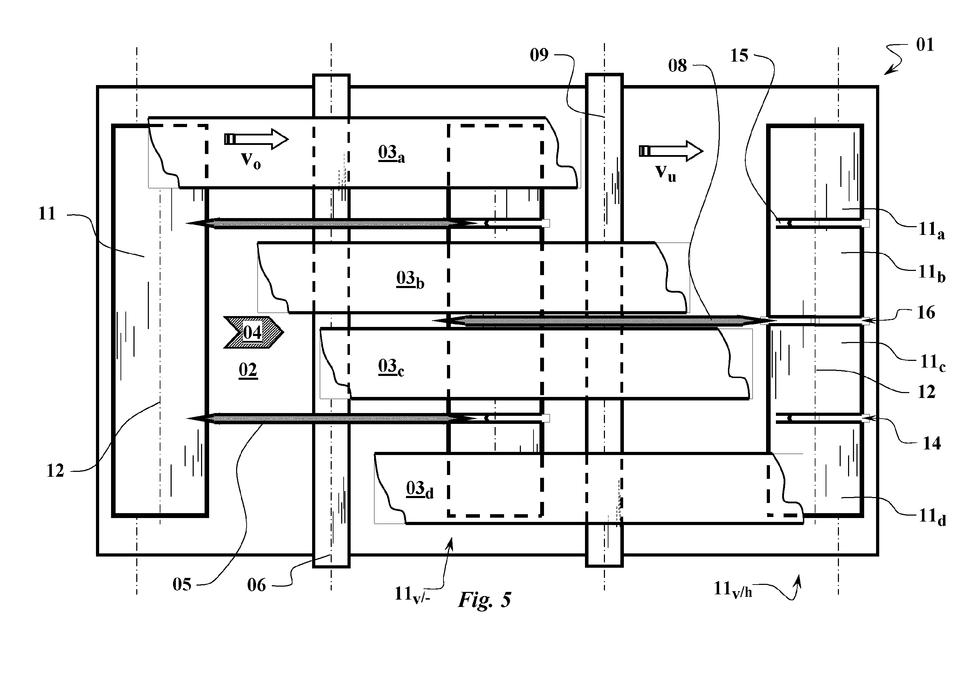

Die **Figur 5** skizziert eine Draufsicht zur Ausführungsform aus Fig. 4, wobei die Ausführung des oberen Förderbands 03 bestehend aus vier Abschnitten 03a, 03b, 03c und 03d erkennbar ist. Vorteilhaft ist hierbei der Abstand zwischen den vorderen Trennmessern 05 einstellbar, wobei bei den oberen Förderbändern 03a zu 03b, 03c zu 03d ein entsprechender Freiraum vorhanden sein muss bzw. alternativ zumindest die äußeren Förderbänder 03a, 03d gleichfalls verstellbar sein müssen.

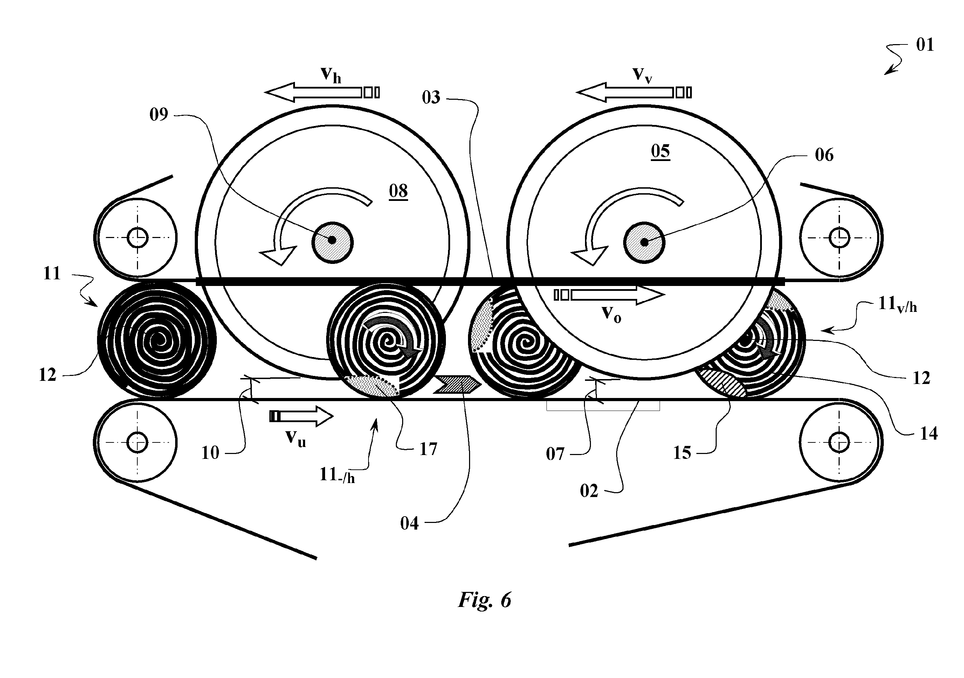

In der **Figur 6** wird nunmehr eine Ausführungsform offenbart, die einen Schnitt der Teigrolle 11 ermöglicht unter Beibehaltung von sowohl vorderen Verbindungsstegen 15 als auch nunmehr einem hinteren Verbindungssteg 17. Hierzu ist gleichfalls das hintere Trennmesser 08 mit seiner hinteren Drehachse 09 derart oberhalb des unteren Förderbands 02 positioniert, dass ein hinterer Trennspalt 12 entsteht. Somit wird beim Vorbeiführen der Teigrolle 11 diese 11 nunmehr vom hinteren Trennmesser 08 nicht mehr vollständig durchtrennt, sondern gleichfalls wie beim vorderen Trennmesser 05 nur abschnittsweise unter Beibehaltung eines hinteren Verbindungsstegs 17. Durch die entsprechende Wahl des Abstands zwischen der vorderen Drehachse 06 und der hinteren Drehachse 09 sowie der gewählten relativen Bandgeschwindigkeiten zwischen dem unteren Förderband 02 und dem oberen Förderband 03 wird die Lage des hinteren Verbindungsstegs 17 relativ zum vorderen Verbindungssteg bezogen auf die Rollenachse 12 bestimmt.

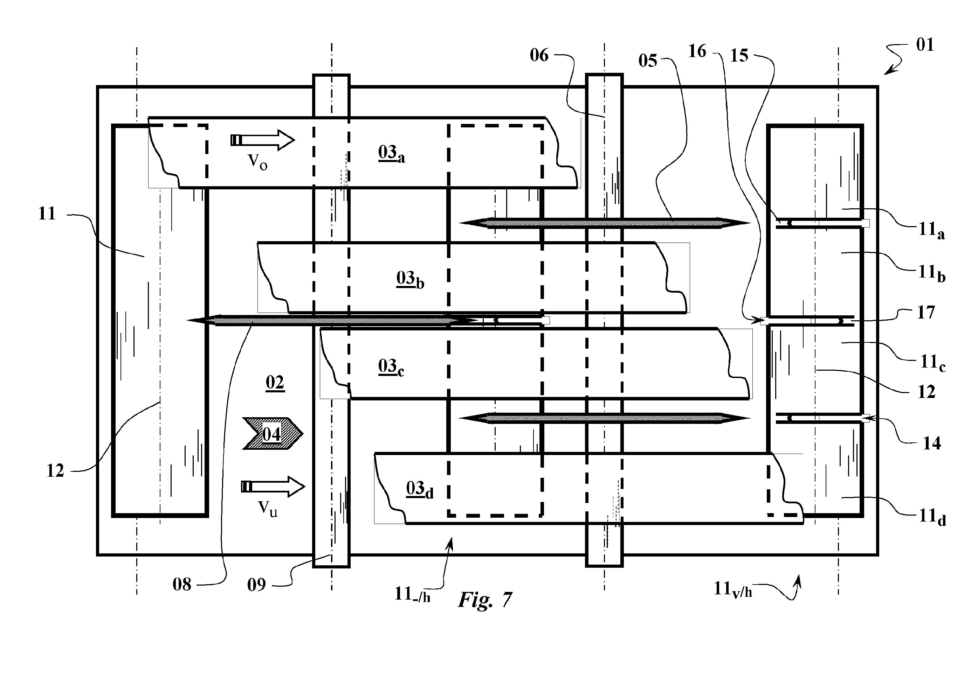

Hierzu skizziert die **Figur 7** eine Draufsicht zur Ausführungsform aus Fig. 6. Zu erkennen ist in Übereinstimmung mit der Ausführung aus Fig. 5 die Ausführung des unteren Transportbands 02 sowie der mehrteiligen oberen Förderbänder 03a bis 03d. Im Gegensatz zur vorherigen Ausführungsform wird hierbei jedoch die Teigrolle 11 nicht vollständig vom hinteren Trennmesser 08 durchtrennt, sondern zum hinteren Trennschnitt 16 verbleibt ein hinterer Verbindungssteg 17, welcher 17 vorteilhaft bei Abgabe der eingeschnittenen Teigrolle 11_{v/h} derart positioniert ist, dass der vordere Verbindungssteg 15 in Förderrichtung 04 betrachtet hinten liegt und der hintere Verbindungssteg 17 in Förderrichtung 04 voraus der Rollenachse 12 positioniert ist.

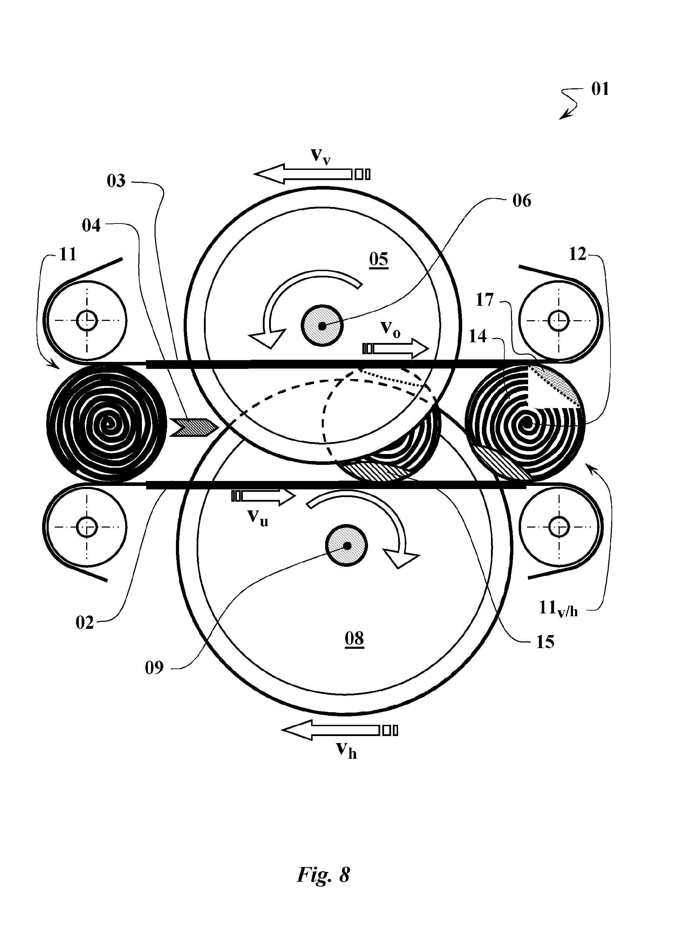

Abweichend zu vorherigen Ausführungsformen skizziert die **Figur 8** eine beispielhafte Teigteilvorrichtung 01, bei welcher 01 hingegen die hintere Drehachse 09 des hinteren Trennmessers 08 unterhalb des unteren Förderbands 02 angeordnet ist. Dies ermöglicht insbesondere bei Erhalt sowohl eines vorderen als auch eines hinteren Verbindungsstegs 15, 17 eine kurz bauende Ausführungsform. Notwendigerweise durchschneidet hierbei das hintere Trennmesser 08 das untere Förderband 02, welches 02 zumindest zweiteilig auszuführen ist. Durch den Abstand des hinteren Trennmessers 08 zum oberen Förderband 03 kann die Stärke des hinteren Verbindungsstegs 17 bestimmt werden.

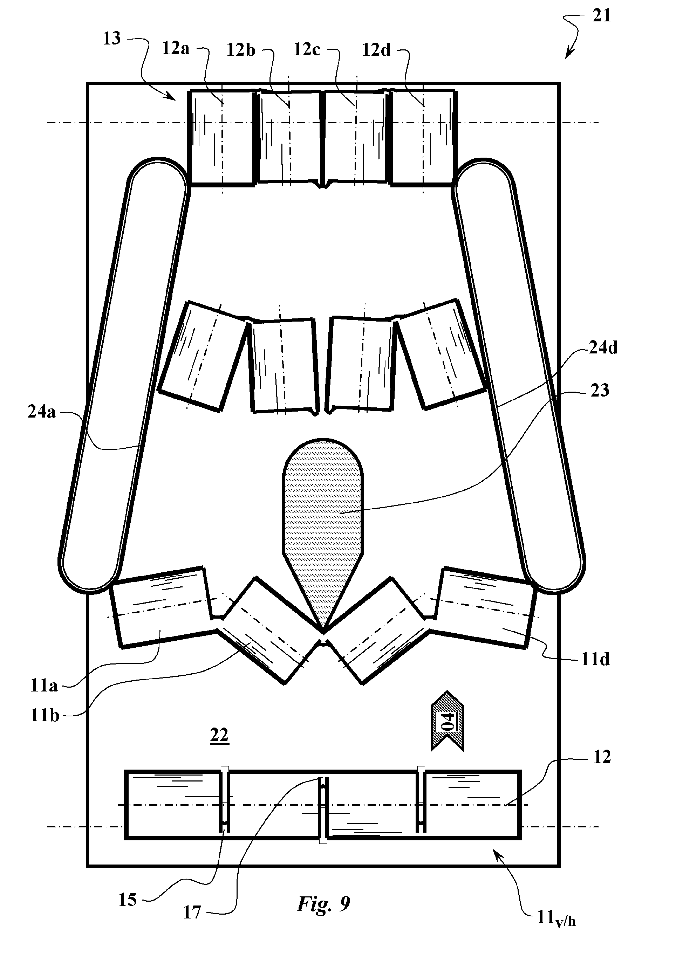

In der **Figur 9** wird nunmehr in Ergänzung zur vorherigen Teigteilvorrichtung 01 ein erstes Ausführungsbeispiel für eine Faltvorrichtung 21 skizziert, welche 21 sich vorteilhaft im Anschluss an die Teigteilvorrichtung 01 anschließt. Hierbei wird die eingeschnittene Teigrolle 11_{v/h} auf Umformelemente 23, 24 zugeführt, wobei mittig oberhalb des Förderbands 22 ein keilförmiger Umformanschlag 23 positioniert ist. Dieser 23 bewirkt ein Auftrennen der Teigrolle 11 _{v/h} beidseitig des Umformanschlags 23. Hierdurch wird zugleich ein Umfalten der einzelnen Abschnitte 11a, 11b, 11c und 11d der Teigrolle 11 _{v/h} eingeleitet. Das Gegeneinanderfalten beidseitig des mittleren Umformanschlags 23 der einzelnen Abschnitte 11a bis 11d der Teigrolle 11_{v/h} wird durch beidseitig zulaufend angeordnete Umformriemen 24a und 24d sichergestellt. Im Ergebnis werden die einzelnen Abschnitte der Teigrolle 11 derart ausgegeben, dass ein umgeformter Teigling 13, mit jeweils parallel zueinander liegenden Abschnitten 12a bis 12d der Rollenachse 12 der Teigrolle 11_{v/h} als zum Toastbrot Backen geeigneter Teigling 13 entsteht.

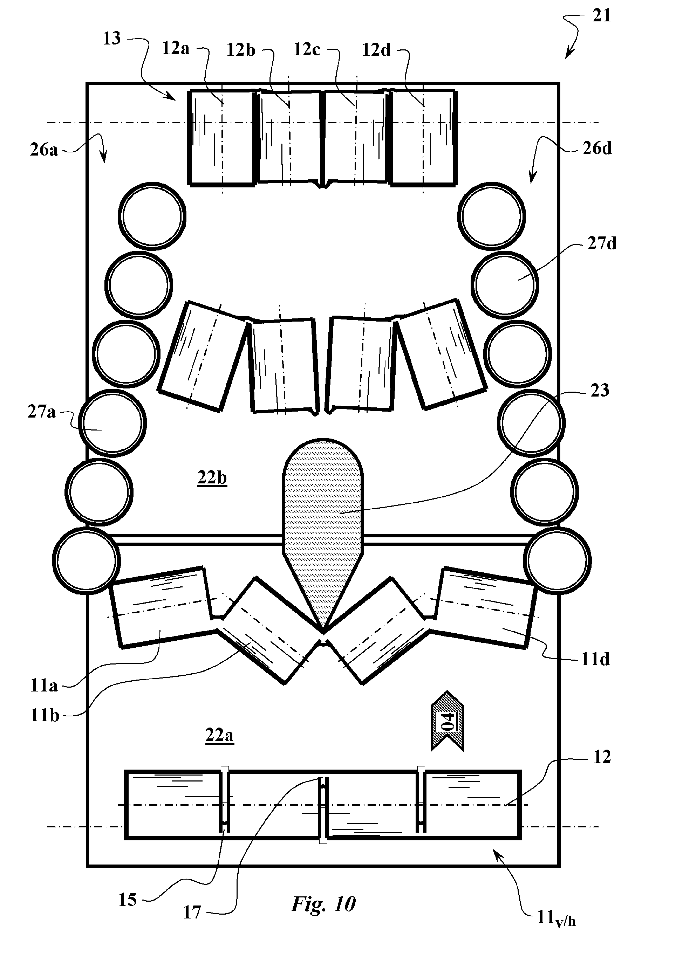

In der **Figur 10** wird eine zur Ausführung aus Fig. 9 alternative Faltvorrichtung 21 skizziert, wobei nunmehr anstelle der Umformriemen beidseitig der Mitte symmetrisch gegenüberstehend jeweils eine in Förderrichtung 04 angeordnete Umformrollenreihe 26a, 26d eingesetzt wird. Der Abstand der gegenüber liegenden einzelnen Umformrollen 27a und 27d nimmt hierbei kontinuierlich ab, um die entsprechende Faltung der Teigrolle 11_{v/h} zu einem Teigling 13 zu bewirken.

Weiterhin skizziert die Figur 10 ein erstes Förderband 22a und ein an der Trennstelle mit geringem Abstand folgendes zweites Förderband 22b. Hierbei ist die Trennstelle unterhalb des Umformanschlags 23 sowie unterhalb der Umformrollenreichen 26a, 26d angeordnet. Folglich liegt beim Umformvorgang der eingeschnittene Teigling 11_{v/h} kurzzeitig nicht auf dem Förderband 22 auf. Dieses begünstigt die Umformung dahingehend, dass der scharnierartige Umformvorgang nicht negativ durch eine Haftreibung auf dem Förderband abgebremst wird. Weiterhin wird das zweite Förderband 22b mit geringerer Geschwindigkeit in der Förderrichtung 04 bewegt als das erste Förderband 22a.

## Patentansprüche

1. Teigteilvorrichtung (01) zur Herstellung eines Teiglings zum Backen von Toastbrot oder dergleichen, mit einem unteren Förderband (02), welches (02) in einer Förderrichtung (04) mit einer variabel einstellbaren unteren Bandgeschwindigkeit (vu) bewegt werden kann, wobei bestimmungsgemäß eine Teigrolle (11) mit einer Rollenachse (12) quer zur Förderrichtung (04) an einem Anfang des Förderbandes (02) aufgelegt wird, und mit zumindest zwei beabstandet angeordneten im Abstand eines variabel einstellbaren vorderen Trennspalts (07) oberhalb des unteren Förderbandes (02) angeordneten vorderen Trennmessern (05), welche (05) die Teigrolle (11) beim Passieren bis auf einen verbleibenden vorderen Verbindungssteg (15) durchtrennen können,
**dadurch gekennzeichnet,**
**dass** die vorderen Trennmesser (05) auf einer gemeinsamen vorderen Drehachse (06) angeordnet sind und um eine vordere Drehachse (06) rotierbar sind, wobei zwischen den vorderen Trennmessern (05) ein hinteres um eine hintere Drehachse (09) rotierbares Trennmesser (08) angeordnet ist, welches (08) die Teigrolle (11) gleichfalls beim Passieren zumindest abschnittsweise durchtrennen kann.

2. Teigteilvorrichtung (01) nach Anspruch 1,
**dadurch gekennzeichnet,**
**dass** das vordere und/oder hintere Trennmesser (05, 08) in Förderrichtung (04) rotieren kann und/oder dass die Drehgeschwindigkeit des vorderen und/oder hinteren Trennmessers (05, 08) variabel einstellbar ist.

3. Teigteilvorrichtung (01) nach Anspruch 1 oder 2, **gekennzeichnet durch** ein oberhalb des unteren Förderbandes (02) angeordnetes zumindest zweiteiliges oberes Förderband (03), welches (03) in Förderrichtung (04) mit einer oberen Bandgeschwindigkeit (vo) bewegt werden kann, wobei das obere Förderband (03) an der Teigrolle (11) anliegt.

4. Teigteilvorrichtung (01) nach Anspruch 3,
**dadurch gekennzeichnet,**
**dass** das oberes Förderband (03) im Abstand zum unteren Förderband (02) variabel verstellbar ist und/oder die obere Bandgeschwindigkeit (vo) variabel verstellbar ist.

5. Teigteilvorrichtung (01) nach einem der Ansprüche 1 bis 4,
**dadurch gekennzeichnet,**
**dass** die hintere Drehachse (09) oberhalb des unteren Förderbandes (02) angeordnet ist und das hintere Trennmesser (08) zumindest bis nahe an das untere Förderband (02) heranreicht oder
**dass** die hintere Drehachse (09) unterhalb des unteren Förderbandes (02) angeordnet ist und das hintere Trennmesser (08) zumindest bis nahe an das obere Förderband (03) heranreicht oder
**dass** das hintere Trennmesser (08) die Auflagefläche eines zumindest zweiteiligen unteren Förderbandes (02) und eine Anlagefläche eines zumindest zweiteiligen oberen Förderbandes (03) durchschneidet, wodurch die Teigrolle (11) an einem hinteren Trennschnitt (16) vollständig durchtrennt wird.

6. Teigteilvorrichtung (01) nach einem der Ansprüche 1 bis 4,
**dadurch gekennzeichnet,**
**dass** die hintere Drehachse (09) oberhalb des unteren Förderbandes (02) angeordnet ist und das hintere Trennmesser (08) mit einem variabel verstellbaren hinteren Trennspalt (10) oberhalb des unteren Förderbands (02) angeordnet ist, oder
**dass** die hintere Drehachse (09) unterhalb des unteren Förderbandes (02) angeordnet ist und das hintere Trennmesser (08) mit einem variabel verstellbaren hinteren Trennspalt (10) unterhalb des oberen Förderbands (03) angeordnet ist,
wodurch die Teigrolle (11) bis auf einen verbleibenden hinteren Verbindungssteg (17) durchtrennt wird.

7. Teigteilvorrichtung (01) nach einem der Ansprüche 3 bis 6,
**dadurch gekennzeichnet,**
**dass** die obere Bandgeschwindigkeit (vₒ) relativ zur unteren Bandgeschwindigkeit (vᵤ) derart regelbar ist, dass der vordere Verbindungssteg (15) bei Abgabe der Teigrolle (11) an einem Ende des Förderbandes (02) eine definierte Solllage relativ zur Rollenachse (12) aufweist.

8. Teigteilvorrichtung (01) nach Anspruch 7,
**dadurch gekennzeichnet,**
**dass** die obere Bandgeschwindigkeit (vₒ) relativ zur unteren Bandgeschwindigkeit (vᵤ) derart regelbar ist, dass der vordere Verbindungssteg (15) bezüglich der Rollenachse (12) um circa 180° versetzt zum hinteren Verbindungssteg (17) angeordnet ist.

9. Teigformvorrichtung mit einer Teigteilvorrichtung (01) gemäß einer der vorhergehenden Ansprüche
**gekennzeichnet durch**
eine Faltvorrichtung (21) im Anschluss an die Teigteilvorrichtung (01), mit zumindest einem Förderband (22, 22a, 22b), auf welchem (22, 22a, 22b) die eingeschnittene Teigrolle (11_{v/h}) transportiert wird, und mit im Wesentlichen aufrecht ausgerichteten, oberhalb des Förderbandes (22) angeordneten Elementen umfassend einen mittig angeordneten Umformanschlag (23) und zwei über die Mitte symmetrisch angeordnete Faltmittel (24, 26).

10. Teigformvorrichtung nach Anspruch 9,
**dadurch gekennzeichnet,**
**dass** der Umformanschlag (23) eine entgegen der Förderrichtung (04) gerichtete keilförmige Gestalt aufweist und die Faltmittel (24) in Förderichtung (04) bewegte Umformriemen (24a, 24d) sind, deren (24a, 24d) Abstand zueinander in Förderrichtung (04) abnimmt.

11. Teigformvorrichtung nach Anspruch 9,
**dadurch gekennzeichnet,**
**dass** der Umformanschlag (23) eine entgegen der Förderrichtung (04) gerichtete keilförmige Gestalt aufweist und die Faltmittel (26) mehrere in Förderichtung (04) aufeinander folgend angeordnete um eine zum Förderband (22) senkrechte Achse rotierbare Umformrollen (27a, 27d) sind, deren (27a, 27d) Abstand zueinander in Förderrichtung (04) abnimmt.

12. Teigformvorrichtung nach einem der Ansprüche 9 bis 11,
**dadurch gekennzeichnet,**
**dass** sich ein erstes Förderband (22a) gegenüber einem zweiten sich in Förderrichtung (04) unmittelbar anschließenden Förderband (22b) mit einer zumindest 50% höheren Geschwindigkeit bewegt werden kann, wobei sich die Trennstelle vom ersten Förderband (22a) zum zweiten Förderband (22b) direkt vor oder unterhalb des Umformanschlags (23) sowie der Faltmittel (24, 26) befindet.

13. Verfahren, insbesondere mit einer Teigteilvorrichtung (01) gemäß einem der Ansprüche 1 bis 8, wobei eine auf einem unteren Förderband (02) abgelegte Teigrolle (11) in einer Förderrichtung (04) transportiert wird und mittels zweier rotierender vorderer Trennmesser (05) ein ziehendes abschnittsweises Durchtrennen der Teigrolle (11) erfolgt, wobei zwei nicht durchtrennte Verbindungsstege (16) verbleiben, wobei mittels eines hinteren um eine hintere Drehachse (09) rotierenden Trennmessers (08) die Teigrolle (11) beim Passieren zumindest abschnittsweise durchtrennt wird.

14. Verfahren nach Anspruch 13,
**dadurch gekennzeichnet,**
**dass** mittels eines oberen Förderbandes (08) die Teigrolle (11) in Rotation versetzt wird, so dass der Verbindungssteg (16) sich an einer vorbestimmten Stellung relativ zu einer Rollenachse (12) befindet.

15. Verfahren nach Anspruch 14,
**dadurch gekennzeichnet,**
**dass** eine obere Bandgeschwindigkeit (vₒ) des oberen Förderbandes (08) gleich der unteren Bandgeschwindigkeit (vᵤ) des unteren Förderbandes (02) ist und die Teigrolle (11) beim Transport ohne Drehbewegung transportiert wird und/oder
**dass** die vordere Drehachse (06) oberhalb des oberen Förderbandes (03) angeordnet ist, dessen obere Bandgeschwindigkeit (vₒ) größer als die untere Bandgeschwindigkeit (vᵤ) ist, wodurch die Teigrolle (11) beim Transport eine Drehbewegung entgegen der Drehrichtung des vorderen Trennmessers (05) vollzieht.

16. Verfahren nach einem der Ansprüche 13 bis 15,
**dadurch gekennzeichnet,**
**dass** eine Umfangsgeschwindigkeit (vᵥ) des vorderen Trennmessers (05) und/oder eine Umfangsgeschwindigkeit (vₕ) des hinteren Trennmessers (08) größer als eine untere Bandgeschwindigkeit (vᵤ) des unteren Förderbandes (02) und kleiner als die 2-fache untere Bandgeschwindigkeit (vₒ) ist und/oder circa dem 1,05-fachen der oberen Bandgeschwindigkeit (vₒ) beträgt.

17. Verfahren nach einem der Ansprüche 13 bis 16, insbesondere mit einer Teigformvornchtung gemäß einem der Ansprüche 9 bis 12,
**dadurch gekennzeichnet,**
**dass** die Teigrolle (11_{v/h}) nach dem Einschneiden umgeformt wird, wobei vier Abschnitte (11a, 11b,11 c, 11 d) der Teigrolle (11_{v/h}) geschwenkt werden, so dass die vier Abschnitte (12a, 12b, 12c, 12d) der Rollenachse im Wesentlichen parallel zueinander liegen.

## Claims

1. A dough cutting device (01) for producing a dough piece for baking toast or the like, comprising a lower conveyor belt (02), which (02) can be driven in a conveying direction (04) at a variably adjustable lower belt speed (vᵤ), wherein as intended a dough roll (11) is placed with a roll centreline (12) transverse to the conveying direction (04) at a starting point of the conveyor belt (02), and comprising at least two front cutting knives (05) arranged at a distance, said distance corresponding to a variably adjustable front separating gap (07) above the lower conveyor belt (02), which (05) cut the dough roll (11) as it passes by except for a remaining front connecting web (15),
**characterised in that**
the front cutting knives (05) are arranged on a common front rotational axis (06) and are rotatable about a front rotational axis (06), wherein a rear cutting knife (08) which is rotatable about a rear rotational axis (09) is arranged between the front cutting knives (05), said rear cutting knife (08) being able to also cut the dough roll (11) at least in sections as it passes by.

2. The dough cutting device (01) according to claim 1, **characterised in that**
the front and/or rear cutting knife (05, 08) is rotatable in the conveying direction (04) and/or that the rotating speed of the front and/or rear cutting knife (05, 08) is variably adjustable.

3. The dough cutting device (01) according to claim 1 or 2, **characterised by**
an at least two-part upper conveyor belt (03) which is arranged above the lower conveyor belt (02) and which (03) can be driven in the conveying direction (04) at an upper belt speed (vₒ), the upper conveyor belt (03) coming to abut on the dough roll (11).

4. The dough cutting device (01) according to claim 3, **characterised in that**
the upper conveyor belt (03) is variably adjustable in its distance from the lower conveyor belt (02), and/or the upper belt speed (vₒ) is variably adjustable.

5. The dough cutting device (01) according to any of the claims 1 to 4,
**characterised in that**
the rear rotational axis (09) is arranged above the lower conveyor belt (02) and the rear cutting knife (08) comes at least close to the lower conveyor belt (02), or
that the rear rotational axis (09) is arranged below the lower conveyor belt (02) and the rear cutting knife (08) comes at least close to the upper conveyor belt (03), or
that the rear cutting knife (08) cuts through the supporting surface of an at least two-part lower conveyor belt (02) and a contact surface of an at least two-part upper conveyor belt (03), thereby completely severing the dough roll (11) at a rear severing cut (16).

6. The dough cutting device (01) according to any of the claims 1 to 4,
**characterised in that**
the rear rotational axis (09) is arranged above the lower conveyor belt (02) and the rear cutting knife (08) is arranged with a variably adjustable rear separating gap (10) above the lower conveyor belt (02), or
that the rear rotational axis (09) is arranged below the lower conveyor belt (02) and the rear cutting knife (08) is arranged with a variably adjustable rear separating gap (10) below the upper conveyor belt (03),
thereby severing the dough roll (11) except for a remaining rear connecting web (17).

7. The dough cutting device (01) according to any of the claims 3 to 6,
**characterised in that**
the upper belt speed (vₒ) is adjustable in relation to the lower belt speed (vᵤ) in such a manner that the front connecting web (15) has a defined target position relative to the roll centreline (12) when the dough roll (11) is discharged at an end of the conveyor belt (02).

8. The dough cutting device (01) according to claim 7,
**characterised in that**
the upper belt speed (vₒ) is adjustable in relation to the lower belt speed (vᵤ) in such a manner that the front connecting web (15) is arranged offset by about 180° from the rear connecting web (17) in relation to the roll centreline (12).

9. A dough shaping device comprising a dough cutting device (01) according to any of the preceding claims,
**characterised by**
a folding device (21) following the dough cutting device (01), comprising at least one conveyor belt (22, 22a, 22b) on which (22, 22a, 22b) the cut-in dough roll (11_{v/h}) is transported, and comprising elements substantially oriented upright and being arranged above the conveyor belt (22), which comprise a centrally arranged reshaping stop (23) and two folding means (24, 26) arranged symmetrical with respect to the middle.

10. The dough shaping device according to claim 9,
**characterised in that**
the reshaping stop (23) has a wedge-shaped form oriented against the conveying direction (04) and the folding means (24) are reshaping belts (24a, 24d) which are moved in the conveying direction (04) and whose (24a, 24d) distance from each other decreases in the conveying direction (04).

11. The dough shaping device according to claim 9,
**characterised in that**
the reshaping stop (23) has a wedge-shaped form oriented against the conveying direction (04) and the folding means (26) are multiple reshaping rolls (27a, 27d) which are rotatable about an axis vertical to the conveyor belt (22) and which are arranged one after the other in the conveying direction (04) and whose (27a, 27d) distance from each other decreases in the conveying direction (04).

12. The dough shaping device according to any of the claims 9 to 11,
**characterised in that**
a first conveyor belt (22a) is movable with at least a 50 % higher speed in relation to a second conveyor belt (22b) which is directly adjacent in the conveying direction (04), wherein the point of separation between the first conveyor belt (22a) and the second conveyor belt (22b) is located directly ahead of or below the reshaping stop (23) and the folding means (24, 26).

13. A process, in particular involving a dough cutting device (01) according to any of the claims 1 to 8, wherein a dough roll (11) placed on a lower conveyor belt (02) is transported in a conveying direction (04) and by means of two rotating front cutting knives (05) a dragging sectional severing of the dough roll (11) takes place, wherein two not severed connecting webs (16) remain, wherein by means of a rear cutting knife (08) rotating about a rear rotational axis (09) the dough roll (11) is cut at least in sections as it passes by .

14. The process according to claim 13,
**characterised in that**
by means of an upper conveyor belt (03) the dough roll (11) is set in rotation so that the connecting web (16) is situated in a predetermined position relative to a roll centreline (12).

15. The process according to claim 14,
**characterised in that**
an upper belt speed (vₒ) of the upper conveyor belt (03) is equal to the lower belt speed (vᵤ) of the lower conveyor belt (02), and during transport the dough roll (11) is transported without a rotational motion and/or
that the front rotational axis (06) is arranged above the upper conveyor belt (03) whose upper belt speed (vₒ) is higher than the lower belt speed (vᵤ), whereby during transport the dough roll (11) performs a rotational motion against the rotational direction of the front cutting knife (05).

16. The process according to any of the claims 13 to 15,
**characterised in that**
a circumferential speed (vᵥ) of the front cutting knife (05) and/or a circumferential speed (vₕ) of the rear cutting knife (08) is higher than a lower belt speed (vᵤ) of the lower conveyor belt (02) and lower than twice the lower belt speed (vᵤ), and/or is roughly 1.05 times the upper belt speed (vₒ).

17. The process according to any of the claim 13 to 16, in particular involving a dough shaping device according to any of the claims 9 to 12,
**characterised in that**
the dough roll (11_{v/h}) is reshaped after being cut in, wherein four sections (11a, 11b, 11c, 11d) of the dough roll (11_{v/h}) are pivoted so that the four sections (12a, 12b, 12c, 12d) of the roll centreline are substantially parallel to one another.

## Revendications

1. Dispositif de séparation de pâte (01) pour produire un pâton pour cuire le pain du mie ou quelque chose semblable, comprenant une bande transporteuse inférieure (02) qui (02) peut être déplacée dans une direction de transport (04) à une vitesse de bande inférieure (vᵤ) étant réglable d'une façon variable, un rouleau de pâte (11) étant placé sur un début de la bande transporteuse (02) conformément à sa destination avec un axe de rouleau (12) transversalement à la direction de transport (04), et comprenant au moins deux lames de séparation antérieures (05) qui sont disposées d'une façon espacée à la distance d'une fente de séparation antérieure (07) étant réglable d'une façon variable au-dessus de la bande transporteuse inférieure (02), les lames de séparation (05) pouvant séparer le rouleau de pâte (11) au passage en laissant une traverse de liaison antérieure (15) restante,
**caractérisé en ce que**
les lames de séparation antérieures (05) sont disposées sur un axe de rotation antérieur (06) commun et peuvent être tournées autour d'un axe de rotation antérieur (06), une lame de séparation arrière (08) étant disposée entre les lames de séparation antérieures (05) qui (08) peut être tournée autour d'un axe de rotation arrière (09) et qui peut aussi séparer le rouleau de pâte (11) au moins par sections au passage.

2. Dispositif de séparation de pâte (01) selon la revendication 1,
**caractérisé en ce que**
la lame de séparation antérieure et/ou arrière (05, 08) peut tourner dans la direction de transport (04) et/ou que la vitesse de rotation de la lame de séparation antérieure et/ou arrière (05, 08) est réglable d'une façon variable.

3. Dispositif de séparation de pâte (01) selon les revendications 1 ou 2,
**caractérisé par**
une bande transporteuse supérieure (03) en au moins deux parties qui est disposée au-dessus de la bande transporteuse inférieure (02) et qui (03) peut être déplacée dans la direction de transport (04) à une vitesse de bande supérieure (vₒ), la bande transporteuse supérieure (03) étant en appui contre le rouleau de pâte (11).

4. Dispositif de séparation de pâte (01) selon la revendication 3,
**caractérisé en ce que**
la distance entre la bande transporteuse supérieure (03) et la bande transporteuse inférieure (02) est réglable d'une façon variable et/ou la vitesse de bande supérieure (vₒ) est réglable d'une façon variable.

5. Dispositif de séparation de pâte (01) selon l'une quelconque des revendications 1 à 4,
**caractérisé en ce que**
l'axe de rotation arrière (09) est disposé au-dessus de la bande transporteuse inférieure (02) et la lame de séparation arrière (08) s'étend au moins jusqu'à proximité de la bande transporteuse inférieure (02) ou
que l'axe de rotation arrière (09) est disposé au-dessous de la bande transporteuse inférieure (02) et la lame de séparation arrière (08) s'étend au moins jusqu'à proximité de la bande transporteuse supérieure (03) ou
que la lame de séparation arrière (08) coupe la surface d'appui d'une bande transporteuse inférieure (02) en au moins deux parties et une surface d'appui d'une bande transporteuse supérieure (03) en au moins deux parties,
par quoi le rouleau de pâte (11) est complètement séparé à une coupe de séparation arrière (16).

6. Dispositif de séparation de pâte (01) selon l'une quelconque des revendications 1 à 4,
**caractérisé en ce que**
l'axe de rotation arrière (09) est disposé au-dessus de la bande transporteuse inférieure (02) et la lame de séparation arrière (08) est disposée avec une fente de séparation arrière (10) étant réglable d'une façon variable au-dessus de la bande transporteuse inférieure (02), ou
que l'axe de rotation arrière (09) est disposé au-dessous de la bande transporteuse inférieure (02) et la lame de séparation arrière (08) est disposée avec une fente de séparation arrière (10) étant réglable d'une façon variable au-dessous de la bande transporteuse supérieure (03),
par quoi le rouleau de pâte (11) est séparé en laissant une traverse de liaison arrière (17) restante.

7. Dispositif de séparation de pâte (01) selon l'une quelconque des revendications 3 à 6,
**caractérisé en ce que**
la vitesse de bande supérieure (vₒ) est réglable relativement à la vitesse de bande inférieure (vᵤ) de telle manière que la traverse de liaison antérieure (15) a une position nominale définie par rapport à l'axe de rouleau (12) quand le rouleau de pâte (11) est sorti à une extrémité de la bande transporteuse (02).

8. Dispositif de séparation de pâte (01) selon la revendication 7,
**caractérisé en ce que**
la vitesse de bande supérieure (vₒ) est réglable relativement à la vitesse de bande inférieure (vᵤ) de telle manière que la traverse de liaison antérieure (15) est disposée d'une façon décalée de la traverse de liaison arrière (17) d'environ 180° par rapport à l'axe de rouleau (12).

9. Dispositif de façonnage de pâte comprenant un dispositif de séparation de pâte (01) selon l'une quelconque des revendications précédentes,
**caractérisé par**
un dispositif de pliage (21) étant adjacent au dispositif de séparation de pâte (01), ayant au moins une bande transporteuse (22, 22a, 22b) sur laquelle (22, 22a, 22b) le rouleau de pâte incisé (11_{v/h}) est transporté, et ayant des éléments orientés essentiellement debout et disposés au-dessus de la bande transporteuse (22), les éléments comprenant une butée de façonnage (23) disposée au centre et deux moyens de pliage (24, 26) disposés symétriquement par le centre.

10. Dispositif de façonnage de pâte selon la revendication 9,
**caractérisé en ce que**
la butée de façonnage (23) a une forme en coin orientée contre la direction de transport (04) et les moyens de pliage (24) sont des courroies de façonnage (24a, 24d) déplacées dans la direction de transport (04) dont (24a, 24d) la distance mutuelle diminue dans la direction de transport (04).

11. Dispositif de façonnage de pâte selon la revendication 9,
**caractérisé en ce que**
la butée de façonnage (23) a une forme en coin orientée contre la direction de transport (04) et les moyens de pliage (26) sont plusieurs rouleaux de façonnage (27a, 27d) étant disposés d'une façon successive dans la direction de transport (04) et étant tournables autour d'un axe vertical à la bande transporteuse (22), dont (27a, 27d) la distance mutuelle diminue dans la direction de transport (04).

12. Dispositif de façonnage de pâte selon l'une quelconque des revendications 9 à 11,
**caractérisé en ce qu'**
une première bande transporteuse (22a) peut être déplacée à une vitesse qui dépasse celle d'une deuxième bande transporteuse (22b) directement adjacente dans la direction de transport (04) d'au moins 50 %, le point de séparation de la première bande transporteuse (22a) à la deuxième bande transporteuse (22b) étant situé directement devant ou au-dessous de la butée de façonnage (23) et des moyens de pliage (24, 26).

13. Procédé, comprenant en particulier un dispositif de séparation de pâte (01) selon l'une quelconque des revendications 1 à 8, dans lequel un rouleau de pâte (11) placé sur une bande transporteuse inférieure (02) est transporté dans une direction de transport (04) et le rouleau de pâte (11) est séparé par sections en tirant par deux lames de séparation antérieures (05) tournantes, deux traverses de liaison (16) non séparées restant, le rouleau de pâte (11) étant séparé au moins par sections au passage par une lame de séparation arrière (08) tournant autour d'un axe de rotation (09) arrière.

14. Procédé selon la revendication 13,
**caractérisé en ce que**
le rouleau de pâte (11) est mis en rotation par une bande transporteuse supérieure (03) de sorte que la traverse de liaison (16) est située dans une position prédéterminée relativement à un axe de rouleau (12).

15. Procédé selon la revendication 14,
**caractérisé en ce qu'**
une vitesse de bande supérieure (vₒ) de la bande transporteuse supérieure (03) est égale à la vitesse de bande inférieure (vᵤ) de la bande transporteuse inférieure (02) et le rouleau de pâte (11) est transporté sans mouvement rotatif en transport et/ou que l'axe de rotation antérieur (06) est disposé au-dessus de la bande transporteuse supérieure (03) dont la vitesse de bande supérieure (vₒ) est supérieure à la vitesse de bande inférieure (vᵤ), par quoi le rouleau de pâte (11) effectue un mouvement rotatif contre la direction de rotation de la lame de séparation antérieure (05) en transport.

16. Procédé selon l'une quelconque des revendications 13 à 15,
**caractérisé en ce qu'**
une vitesse périphérique (vᵥ) de la lame de séparation antérieure (05) et/ou une vitesse périphérique (vₕ) de la lame de séparation arrière (08) est supérieure à une vitesse de bande inférieure (vᵤ) de la bande transporteuse inférieure (02) et est inférieure à la double vitesse de bande inférieure (vₒ) et/ou correspond à 1,05 fois la vitesse de bande supérieure (vₒ).

17. Procédé selon l'une quelconque des revendications 13 à 16, comprenant en particulier un dispositif de façonnage de pâte selon l'une quelconque des revendications 9 à 12,
**caractérisé en ce que**
le rouleau de pâte (11_{v/h}) est façonné après l'incision, quatre sections (11a, 11b, 11c, 11d) du rouleau de pâte (11_{v/h}) étant pivotées de sorte que les quatre sections (12a, 12b, 12c, 12d) de l'axe de rouleau sont essentiellement parallèles l'une par rapport à l'autre.
